(19) **Europäisches Patentamt / European Patent Office / Office européen des brevets**

(11) **EP 3 820 097 B1**

(12) **EUROPEAN PATENT SPECIFICATION**

(45) Date of publication and mention
of the grant of the patent:
**08.11.2023  Bulletin 2023/45**

(21) Application number: **18925333.9**

(22) Date of filing: **06.07.2018**

(51) International Patent Classification (IPC):
**H04L 27/26** (2006.01)      **H04W 52/54** (2009.01)
**H04W 72/04** (2023.01)      H04W 52/14 (2009.01)
H04W 52/22 (2009.01)      H04W 52/24 (2009.01)
H04W 52/58 (2009.01)      H04W 72/20 (2023.01)

(52) Cooperative Patent Classification (CPC):
**H04W 52/146; H04W 52/247; H04W 52/248;**
**H04W 52/58; H04W 72/20;** H04L 27/26025;
H04W 52/221

(86) International application number:
**PCT/JP2018/025784**

(87) International publication number:
**WO 2020/008647 (09.01.2020 Gazette 2020/02)**

(54) **TERMINAL, METHOD AND SYSTEM**

ENDGERÄT, VERFAHREN UND SYSTEM

TERMINAL, PROCÉDÉ ET SYSTÈME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.05.2021  Bulletin 2021/19**

(73) Proprietor: **NTT DoCoMo, Inc.**
**Tokyo 100-6150 (JP)**

(72) Inventors:
• **TAKEDA, Kazuki**
**Tokyo 100-6150 (JP)**
• **OSAWA, Ryosuke**
**Tokyo 100-6150 (JP)**
• **NAGATA, Satoshi**
**Tokyo 100-6150 (JP)**
• **WANG, Lihui**
**Beijing 100190 (CN)**
• **HOU, Xiaolin**
**Beijing 100190 (CN)**

(74) Representative: **Hoffmann Eitle**
**Patent- und Rechtsanwälte PartmbB**
**Arabellastraße 30**
**81925 München (DE)**

(56) References cited:
**WO-A1-2016/163503      US-A1- 2016 029 239**

• **"3rd Generation Partnership Project; Technical
Specification Group Radio Access Network; NR;
Physical layer procedures for control (Release
15)", 3GPP DRAFT; 38213-F20, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , 29 June 2018 (2018-06-29),
XP051454109, Retrieved from the Internet:
URL:http://www.3gpp.org/ftp/3guInternal/3G
PP%5Fultimate%5Fversions%5Fto%5Fbe%5Ftr
ans posed/sentToDpc [retrieved on 2018-06-29]**
• **SAMSUNG: "Corrections on UL power control",
3GPP DRAFT; R1-1806743 CORRECTIONS ON UL
POWER CONTROL-SAMSUNG, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG1, no. Busan,
Korea; 20180521 - 20180525 20 May 2018
(2018-05-20), XP051441945, Retrieved from the
Internet:
URL:http://www.3gpp.org/ftp/Meetings%5F3GP
P%5FSYNC/RAN1/Docs/ [retrieved on
2018-05-20]**

• 3GPP: "3rd Generation Partnership Project; Technical Specification Group Radio Access Network; NR; Physical layer procedures for control (Release 15)", 3GPP TS38.213 V15.1.0, 6 April 2018 (2018-04-06), XP051435591,

**Description**

Technical Field

The present invention relates to a user terminal in next-generation mobile communication systems.

Background Art

In existing LTE systems (for example, Rel. 8 - Rel. 14), a user terminal (UE (User Equipment)) controls a transmission power for an uplink shared channel (for example, PUSCH (Physical Uplink Shared Channel)) or an uplink control channel (for example, PUCCH (Physical Uplink Control Channel)) in accordance with a transmission power control (TPC, transmit power control) command from a base station (eNB (eNode B)).

In the existing LTE systems, the TPC commands for a plurality of user terminals in a downlink control information (DCI) format 3A or DCI format 3 (hereinafter, also referred to as DCI format 3A/3) are transmitted in a common search space.

Non-Patent Literature 2 relates to characteristics of the physical layer procedures for control operations in 5G-NR.

Citation List

Non-Patent Literature

Non-Patent Literature 1: 3GPP TS 36.213 V13.8.0 "Evolved Universal Terrestrial Radio Access (E-UTRA); Physical layer procedures (Release 13)," December, 2017

Non-Patent Literature 2: "3rd Generation Partnership Project; Technical Specification Group Radio Access Network; NR; Physical layer procedures for control (Release 15)", 38213-F20; FRANCE, 29 June 2018 (2018-06-29), XP051454109

Summary of Invention

Technical Problem

In future radio communication systems (for example, 5G, 5G+, NR, Rel. 15 or later versions), a study is underway to collectively notify a plurality of user terminals of a TPC command. For example, DCI format 2_2 transmitted in the common search space is used to transmit the TPC command for at least one of the PUSCH and the PUCCH. DCI format 2 3 transmitted in the common search space is used to transmit a set of TPC commands for one or more user terminals to transmit sounding reference signals (SRS) .

However, in the future radio communication systems (for example, NR), some of restrictions on applying a certain DCI format (for example, DCI format 2_2/2_3) and a TPC command included in the certain DCI format are not clear.

The present invention has been made in view of the above, and has an object to provide a user terminal to which a certain DCI format and a TPC command included in the certain DCI format are appropriately applicable in the future radio communication systems.

Solution to Problem

According to an aspect of the present invention, there is provided a terminal as set out in claim 1. According to another aspect of the present invention, there is provided a radio communication method for a terminal as set out in claim 5. According to another aspect of the present invention, there is provided a system as set out in claim 6. Further embodiments of the invention are set out in the dependent claims.

Advantageous Effects of Invention

According to the present invention, a certain DCI format and a TPC command included in the certain DCI format can be appropriately applied in the future radio communication systems.

Brief Description of Drawings

FIG. 1 is a diagram to show an example of a plurality of control regions mapped in NR;
FIG. 2 is a diagram to show an example of an NR scheduling timing;
FIGS. 3A and 3B are diagrams to show a relationship between a component carrier on which DCI is transmitted and a component carrier on which each channel to be controlled by transmission power control is transmitted according to a first aspect;
FIGS. 4A and 4B are diagrams to show a relationship between a component carrier on which DCI is transmitted and a component carrier on which each channel to be controlled by transmission power control is transmitted according to the first aspect;
FIG. 5 is a diagram to show a relationship between a component carrier on which DCI is transmitted and a component carrier on which each channel to be controlled by transmission power control is transmitted according to the first aspect;
FIGS. 6A and 6B are diagrams to show a relationship between a component carrier on which DCI is transmitted and a component carrier on which each channel to be controlled by transmission power control is transmitted according to the first aspect;
FIG. 7 is a diagram to show an example of a PUSCH power control adjustment state on a transmission occasion i in NR;
FIGS. 8A, 8B and 8C are diagrams to show examples of a reception timing of the DCI according to a second aspect;
FIG. 9 is a diagram to show an example of a condition for accumulating a plurality of TPC commands according to a fourth aspect;
FIG. 10 is a diagram to show an example of a schematic structure of a radio communication system according to the present embodiment;
FIG. 11 is a diagram to show an example of a functional structure of a radio base station according to the present embodiment;
FIG. 12 is a diagram to show an example of a functional structure of a baseband signal processing section in the radio base station;
FIG. 13 is a diagram to show an example of a functional structure of a user terminal according to the present embodiment;
FIG. 14 is a diagram to show an example of a functional structure of a baseband signal processing section in the user terminal; and
FIG. 15 is a diagram to show an example of a hardware structure of the radio base station and the user terminal according to an embodiment of the present invention.

Description of Embodiments

In the future radio communication systems (for example, NR), great reduction of latency is required for providing Ultra-Reliable and Low-Latency Communications (URLLC). The latency includes a latency due to a signal propagation time (propagation latency) and a latency due to a signal processing time (processing latency).

Examples of an assumed method for reducing the latency may include introducing a TTI (short TTI (Transmission Time Interval)) shorter than a subframe of 1 ms (TTI) used in the existing LTE systems to reduce a unit of processing for communication control. Here, the TTI of 1 ms in the existing LTE systems may be referred to as a normal TTI (nTTI). A TTI shorter than the normal TTI (nTTI) may be referred to as a shortened TTI (sTTI). The processing time in the existing LTE systems may be referred to as a normal processing time. A processing time shorter than the normal processing time may be referred to as a shortened processing time.

A user terminal configured with a shortened TTI (sTTI) is configured to use a channel in units of time shorter than an existing data channel and a control channel. For example, a shortened channel transmitted or received at a shortened TTI (sTTI) under study includes a shortened downlink control channel (sPDCCH (shortened Physical Downlink Control channel)), a shortened downlink shared channel (sPDSCH (shortened Physical Downlink Shared Channel)), a shortened uplink control channel (sPUCCH (shortened PUCCH)), a shortened uplink shared channel (sPUSCH (shortened PUSCH)) and the like.

In a case that the shortened TTI is configured, at least one shortened TTI of a shortened TTI in frequency division duplex (FDD) and time division duplex (TDD) and a shortened TTI on uplink and downlink may be independently configured. For example, in the FDD, a TTI length of at least the shortened TTI on the uplink may be configured to be longer than a TTI length of the shortened TTI on the downlink.

In the existing LTE systems, a transmission power for an uplink signal is controlled based on a transmission power control (TPC) command and the like included in downlink control information. The TPC command for controlling the transmission power for the uplink shared channel (PUSCH) is included in a downlink control channel (PDCCH/EPDCCH (Enhanced PDCCH)) transmitting DCI format 0/4, a downlink control channel (MPDCCH (Machine type communication (MTC) PDCCH)) transmitting DCI format 6-0A, and a downlink control channel (PDCCH/MPDCCH) transmitting DCI format 3/3A. DCI format 3/3A may be cyclic redundancy check (CRC)-scrambled with an identifier for the TPC of the PUSCH (TPC-PUSCH-RNTI (Radio Network Temporary Identifier)).

The user terminal, in a case of transmitting a PUSCH in a subframe (SF #i), controls the transmission power for the PUSCH, based on a TPC command included in a subframe (SF #i - $K_{pusch}$) that is a certain number of (for example, $K_{pusch}$) subframes before. In a case of the FDD, the user terminal applies $K_{pusch} = 4$. In a case of the TDD, the user terminal applies $K_{pusch}$ that is defined per UL subframe depending on a UL/DL configuration.

The TPC command controlling the transmission power for the uplink control channel (PUCCH) is included in a downlink control channel (PDCCH/EPDCCH) transmitting DCI format 1A/1B/1D/1/2A/2/2B/2C/2D, a downlink control channel (MPDCCH) transmitting DCI format 6-1A, and a downlink control channel (PDCCH/MPDCCH) transmitting DCI format 3/3A. DCI format 3/3A may be CRC-scrambled with an identifier for the TPC of the PUCCH (TPC-PUCCH-RNTI).

The user terminal uses, for a PUCCH transmission in a subframe (SF #i), a TPC command included in a subframe (SF #i - $k_m$) that is a certain number of (for example, $k_m$) subframes before, to control the transmission power for the PUCCH based on Equation (1) below.

[Math. 1]

$$g(i) = g(i-1) + \sum_{m=0}^{M-1} \delta_{PUCCH}(i-k_m)$$

Equation (1)

In Equation (1), g(i) represents a current PUCCH power control adjustment state, and g(0) corresponds to the first value after a reset. M represents the number of subframes corresponding to the TPC command.

In a case that the FDD or FDD-TDD carrier aggregation is adopted and a primary cell is the FDD, the transmission power for the PUCCH is controlled assuming M = 1 and $k_m = 4$. In a case of the TDD, values defined per UL subframe depending on the UL/DL configuration are applied to values of M and $k_m$.

The user terminal, in a case that M represents a plural number, in other words M > 1, can use the TPC command transmitted in a plurality of DL subframes to control the transmission power for the PUCCH (for example, Rel. 8).

The user terminal, in the case that M represents a plural number, in other words M > 1, can also use a TPC command transmitted in one DL subframe (for example, the earliest DL subframe in a time direction) to control the transmission power for the PUCCH, and can use a bit value of another TPC command for another usage (for example, specifying a PUCCH resource) and the like (for example, Rel. 10 or later versions).

In this manner, in the existing LTE systems, the transmission power for the uplink signal is decided based on the TPC command included in the downlink control information transmitted in a certain subframe.

Applying the TPC command in a case that the shortened processing time is configured is defined as described below.

For the uplink shared channel (for example, PUSCH), only a TPC command included in the DCI is considered. For the shortened uplink shared channel (for example, sPUSCH), only a TPC command included in shortened DCI (sDCI) is considered.

Assume that in a case that the user terminal detects DCI format 3/3A in a subframe n, and detects a specific UL grant of a timing (n + 3) in a subframe (n + 1), the user terminal uses, for a PUSCH transmission in a subframe (n + 4), a TPC command provided by the specific UL grant transmitted in the subframe (n + 1).

In the existing LTE systems, the user terminal controls, in the case of transmitting a PUSCH in a subframe (SF #i), the transmission power for the PUSCH based on a TPC command included in a subframe (SF #i - $K_{PUSCH}$) that is a certain number of (for example, $K_{PUSCH}$) subframes before. In the case of the FDD, the user terminal applies $K_{PUSCH} = 4$. In the case of the TDD, the user terminal applies $K_{PUSCH}$ that is defined per UL subframe depending on the UL/DL configuration.

In shortened PUSCH power control, in a case that the FDD is employed and an uplink shortened TTI length is a slot, $K_{PUSCH} = 4$ is applied. In a case that the uplink shortened TTI length is a subslot, $K_{PUSCH} = X_P$ is applied. Here, $X_P$ represents a processing time configured through higher layer signaling.

In shortened PUSCH power control, in a case of the TDD, $K_{PUSCH}$ is given on the basis of a timing between the UL grant and the shortened PUSCH depending on a TDD UL/DL configuration and a special subframe configuration.

In shortened PUSCH power control, both a TPC accumulated mode for closed loop transmission power control and a TPC non-accumulated mode are supported.

In a case that the user terminal is configured (or reconfigured) through a shortened TTI operation for a serving cell, an initial value fc(0) for a slot or subslot PUSCH of a serving cell c is decided as a current value fc(*) for a subframe PUSCH of the serving cell c. Specifically, $f_{c, \text{slot-subslot}}(0) = f_{c\_\text{subframe}}(*)$ is satisfied.

For the uplink control channel (for example, PUCCH), only a TPC command included in the DCI is considered. For the shortened uplink control channel (for example, sPUCCH), only a TPC command included in the shortened DCI is considered.

In shortened PUCCH power control, M = 1 in the case of the FDD. M represents the number of subframes corresponding to the TPC command. In a case that a downlink shortened TTI length is a slot, $k_m = 4$ is applied. In a case that the downlink shortened TTI length is a subslot, $k_m = X_P$ is applied. Here, $X_P$ represents a processing time configured through higher layer signaling.

In the shortened PUCCH power control, in the case of the TDD, M and $k_m$ are given on the basis of a timing between the shortened PDSCH and a corresponding acknowledgment signal (HARQ-ACK (Hybrid Automatic Repeat Request-Acknowledgment)) depending on the TDD UL/DL configuration and the special subframe configuration.

In a case that the user terminal is configured (or reconfigured) through a shortened TTI operation for the primary cell, an initial value g(0) for the shortened PUCCH in the primary cell is decided as a current (or latest) value g(*) for the PUCCH of the primary cell.

In the future radio communication systems (for example, NR), the transmission power for the user terminal is controlled by use of open loop transmission power control and closed loop transmission power control. The user terminal corrects an error in the open loop control by the closed loop control using the TPC command received from the base station.

For example, the transmission power for the uplink shared channel (for example, PUSCH), the uplink control channel (for example, PUCCH), the sounding reference signal (SRS) and the like are to be controlled by the transmission power control.

For the future radio communication systems (for example, NR), a study is underway to support up to two closed loops for each carrier of the serving cell.

In the future radio communication systems (for example, NR), the transmission power for the PUSCH in a transmission period i for a bandwidth part (BWP) b of a carrier f of the serving cell c may be expressed by Equation (2) below. Here, the transmission period may be, for example, a symbol, a slot, a subframe, a frame, and the like.

[Math. 2]

$$\text{Equation (2)}$$

$$P_{\text{PUSCH}b,f,c}(i, j, q_d, l) = \min \left\{ \begin{array}{l} P_{\text{CMAX},f,c}(i), \\ P_{\text{O\_PUSCH}b,f,c}(j) + 10\log_{10}(2^\mu \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{array} \right\}$$

In Equation (2), $f_{b, f, c}(i, l)$ represents a value based on the TPC command (for example, an accumulated value based on the TPC command). l is an index of the power control adjustment state. In a case that the user terminal is configured to maintain a plurality of (for example, two) power control adjustment states of a certain channel (for example, PUSCH, PUCCH or the like) by use of, for example, higher layer signaling, the user terminal can use at least one of the plurality of values as l. In a case that the user terminal is not configured as such, the user terminal may assume that one value (for example, l = 0) is used for l.

For example, in a case that an RRC parameter "twoPUSCH-PC-AdjustmentStates" is configured for the PUSCH, the user terminal may determine that two power control states are applied to the transmission power control of the PUSCH.

Also for other uplink signals (for example PUCCH, SRS, and the like), the transmission powers can be decided by use of a plurality of power control adjustment states similarly to the PUSCH, although parameters to be used are different.

In the future radio communication systems (for example, NR), a timing for applying the TPC command is defined as $K_{\text{PUSCH}}$, $K_{\text{PUCCH}}$, or $K_{\text{SRS}}$. The specification does not refer to which UE-specific DCI or DCI format 2_2/2_3 is prioritized in a case that the user terminal detects both. The specification does not also refer to whether a timing to apply the TPC command depends on user terminal capability (UE capability).

Here, DCI format 2_2 may be cyclic redundancy check (CRC)-scrambled with the identifier for the TPC of the PUSCH (TPC-PUSCH-RNTI (Radio Network Temporary Identifier)). DCI format 2_2 may be CRC-scrambled with the identifier for the TPC of the PUCCH (TPC-PUCCH-RNTI).

In a case that the TPC accumulation is enabled, a PUSCH with a UL grant configured by a higher layer (configured grant PUSCH) and a PUSCH based on a dynamic grant (dynamic grant based PUSCH) can share the TPC command so long as the parameters i and l are the same. The TPC command is shared between an aperiodic SRS, a semi-persistent SRS, and a periodic SRS.

In the future radio communication systems (for example, NR), DCI format 2_2/2_3 transmitted in the common search space may be transmitted also on an SCell (Secondary Cell).

The future radio communication systems (for example, NR) support DCI format 2_2/2_3 monitoring in a type-3 common search space on the SCell. In contrast, in the existing LTE systems, DCI format 3/3A monitoring is supported only in the common search space on a PCell (Primary Cell) or a PSCell (Primary Secondary Cell) .

In the future radio communication systems (for example, NR), the user terminal may receive a plurality of DCI formats 2_2/2_3 in one slot or one monitoring occasion on a particular DL component carrier (CC).

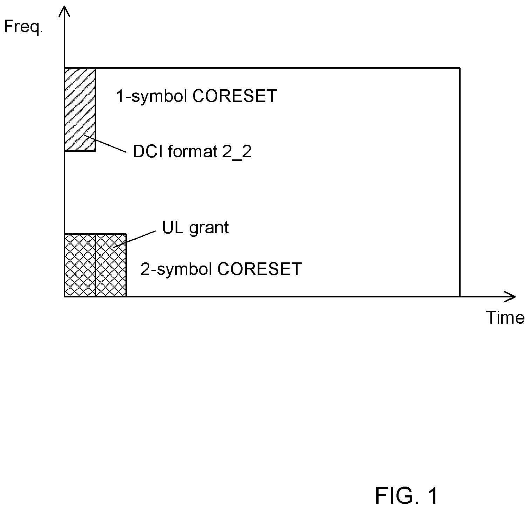

FIG. 1 is a diagram to show an example of a plurality of control regions mapped in NR. It is not clear, in a case that as shown in FIG. 1, other than on an identical monitoring occasion or overlapping monitoring occasions, both DCI format 2_2 and the UL grant are received on the identical monitoring occasion or the overlapping monitoring occasions, or in an identical search space, how the user terminal handles the TPC command included in these.

As described above, in the future radio communication systems (for example, NR), some of restrictions on applying DCI format 2_2/2_3 and the TPC command included in DCI format 2_2/2_3 are not clear.

In the future radio communication systems (for example, NR), a scheduling timing is flexible. For example, the user terminal having at least a certain terminal capability (for example, UE processing capability or PUSCH timing capability) can perform transmission for a firstly scheduled transmission after a later scheduled transmission. How to control the power in such a case is not clear.

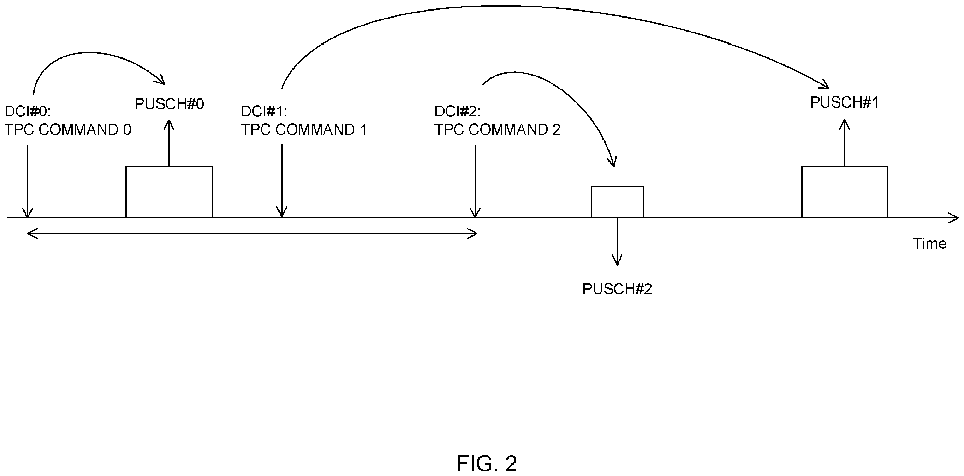

FIG. 2 is a diagram to show an example of an NR scheduling timing. DCI #0 scheduling PUSCH #0 includes TPC command 0. DCI #1 scheduling PUSCH #1 includes TPC command 1. DCI #2 scheduling PUSCH #2 includes TPC command 2. DCI #1 may be DCI format 0_0/0_1. DCI #1 scheduling PUSCH #1 is transmitted before DCI #2 scheduling PUSCH #2, but PUSCH #1 is transmitted after PUSCH #2.

As shown in FIG. 2, in a flexible NR scheduling, it is not clear, as the transmission power control of PUSCH #2, whether to accumulate TPC command 0 and TPC command 1 included in DCI format 0_0/0_1.

As described above, in the future radio communication systems (for example, NR), some of restrictions on applying a certain DCI format (for example, DCI format 2_2/2_3) and a TPC command included in the certain DCI format are not clear.

In view of these, the inventors of the present invention specifically define some of restrictions on applying a certain DCI format (for example, DCI format 2_2/2_3) and a TPC command included in the certain DCI format in the future radio communication systems (for example, NR).

Hereinafter, the present embodiment will be described with reference to the accompanying drawings.

The present embodiment describes a case, as an example, that DCI format 2_2 or DCI format 2_3 (hereinafter, also referred to as DCI format 2_2/2_3) is applied as a certain DCI format in the future radio communication systems (for example, NR), but the DCI format is not limited thereto.

(First Aspect)

A first aspect describes applying of a certain DCI format in a case that the certain DCI format (for example, DCI format 2_2/2_3) is transmitted on a plurality of component carriers (CCs) in the future radio communication systems (for example, NR).

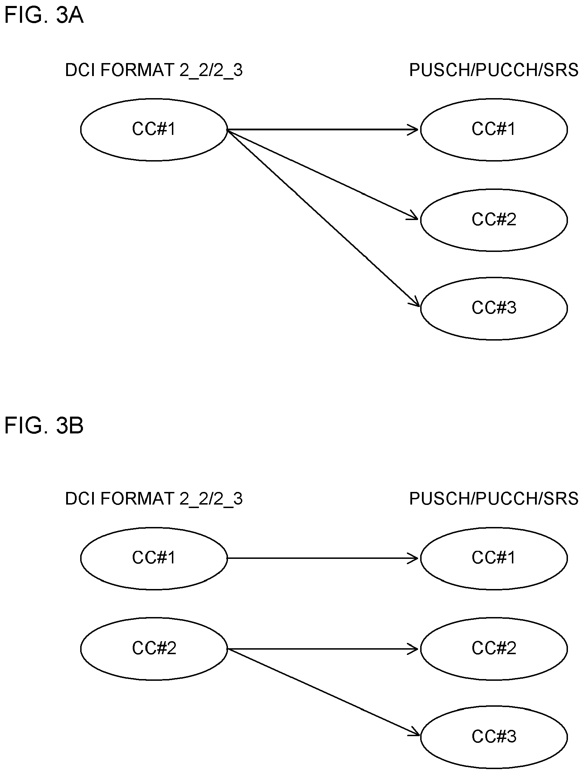

FIGS. 3A to 6B are diagrams to show a relationship between a component carrier on which DCI format 2_2/2_3 is transmitted and a component carrier on which each channel (for example, PUSCH, PUCCH, SRS) to be controlled by the transmission power control is transmitted according to the first aspect.

(Aspect 1-1)

The user terminal does not expect to be configured to monitor DCI format 2_2/2_3 on a plurality of serving cells (component carriers) for a certain cell group (CG) or PUCCH group. Specifically, the user terminal may monitor the DCI format on the plurality of serving cells in accordance with the restrictions similar to the existing LTE systems.

The base station configures the user terminal such that the user terminal monitors DCI format 2_2/2_3 for a certain cell group (CG) or PUCCH group on up to one serving cell (component carrier).

The user terminal monitors DCI format 2_2/2_3 for a plurality of channels (PUSCH, PUCCH, SRS) on one serving cell (component carrier). In this case, a plurality of bit fields in one DCI format 2_2/2_3 may be used to give a plurality of TPC commands to the plurality of channels (PUSCH, PUCCH, SRS).

In Aspect 1-1, the user terminal may monitor DCI format 2_2/2_3 as shown in FIG. 3A.

As shown in FIG. 3A, the user terminal may monitor DCI format 2_2/2_3 only on one component carrier (CC #1). Specifically, only one DCI format 2_2/2_3 is applied to each channel (PUSCH, PUCCH, SRS) on each component carrier (CC #1, CC #2, CC #3).

As shown in FIG. 3A, the user terminal may apply DCI format 2_2/2_3 transmitted from CC #1 to each channel on CC #1. The user terminal may apply DCI format 2_2/2_3 transmitted from CC #1 to each channel on CC #2. The user terminal may apply DCI format 2_2/2_3 transmitted from CC #1 to each channel on CC #3.

The user terminal may apply the TPC command included in DCI format 2_2/2_3 to each channel to perform the transmission power control.

(Aspect 1-2)

The user terminal may be configured to monitor DCI format 2_2/2_3 on one or a plurality of serving cells (component carriers) for the cell group or the PUCCH group. However, the user terminal does not expect to be configured to apply DCI format 2_2/2_3 transmitted from the plurality of serving cells (component carriers) to each channel (PUSCH, PUCCH, SRS) on one serving cell (component carrier).

The base station, which can configure the user terminal such that the user terminal monitors DCI format 2_2/2_3 for a certain cell group (CG) or PUCCH group on one or a plurality of serving cells (component carriers), controls such that DCI format 2_2/2_3 transmitted from the plurality of serving cells (component carriers) is not applied to each channel (PUSCH, PUCCH, SRS) on one serving cell (component carrier).

Specifically, the user terminal applies DCI format 2_2/2_3 transmitted from one serving cell (component carrier) to each channel on each serving cell (component carrier). The user terminal does not apply DCI format 2_2/2_3 transmitted from the plurality of serving cells (component carriers) to each channel on one serving cell.

A plurality of bit fields in one DCI format 2_2/2_3 may be used to give a plurality of TPC commands to a plurality of channels (PUSCH, PUCCH, SRS) on a plurality of serving cells. A plurality of DCI formats 2_2/2_3 monitored in different serving cells may be used to give the plurality of TPC commands.

In Aspect 1-2, the user terminal may monitor DCI format 2_2/2_3 as shown in FIG. 3A or 3B.

As shown in FIG. 3B, the user terminal may monitor DCI format 2_2/2_3 on a plurality of component carriers (CC #1, CC #2). The user terminal may apply DCI format 2_2/2_3 transmitted from one component carrier (CC #1 or CC #2) to each channel (PUSCH, PUCCH, SRS) on each component carrier (CC #1, CC #2, CC #3).

As shown in FIG. 3B, the user terminal may apply DCI format 2_2/2_3 transmitted from CC #1 to each channel on CC #1. The user terminal may apply DCI format 2_2/2_3 transmitted from CC #2 to each channel on CC #2. The user terminal may apply DCI format 2_2/2_3 transmitted from CC #2 to each channel on CC #3.

The user terminal may apply the TPC command included in DCI format 2_2/2_3 to each channel to perform the transmission power control.

(Aspect 1-3)

The user terminal may be configured to monitor DCI format 2_2/2_3 on one or a plurality of serving cells (component carriers) for the cell group or the PUCCH group. The user terminal may apply DCI format 2_2/2_3 transmitted from one or a plurality of serving cells (component carriers) to each channel (PUSCH, PUCCH, SRS) on one serving cell (component carrier).

The base station can configure the user terminal such that the user terminal monitors DCI format 2_2/2_3 for a certain cell group (CG) or PUCCH group on one or a plurality of serving cells (component carriers).

A plurality of bit fields in one DCI format 2_2/2_3 may be used to give a plurality of TPC commands to a plurality of channels (PUSCH, PUCCH, SRS) on a plurality of serving cells. A plurality of DCI formats 2_2/2_3 monitored in different serving cells may be used to give the plurality of TPC commands.

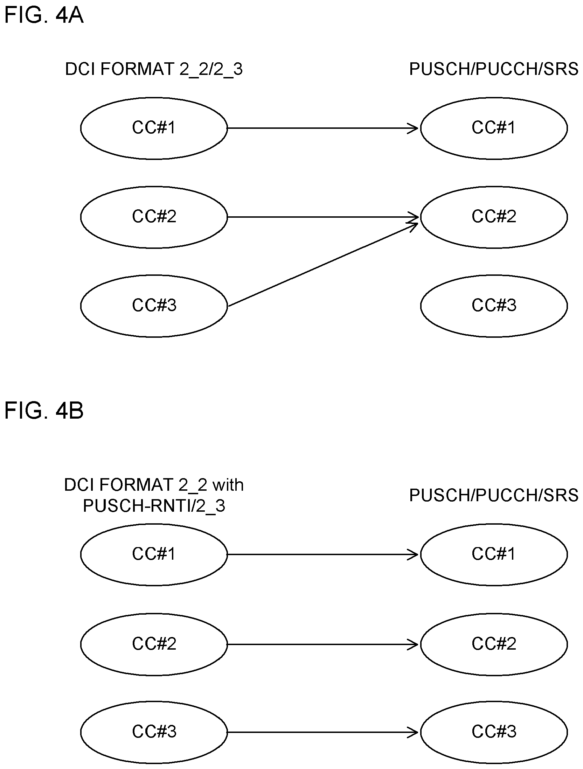

In Aspect 1-3, the user terminal may monitor DCI format 2_2/2_3 as shown in FIG. 3A, 3B, or 4A.

As shown in FIG. 4A, the user terminal may monitor DCI format 2_2/2_3 on one or a plurality of component carriers (CC #1, CC #2, CC #3). The user terminal may apply DCI format 2_2/2_3 transmitted from one or a plurality of component carriers (CC #1, CC #2, CC #3) to each channel (PUSCH, PUCCH, SRS) on each component carrier (CC #1, CC #2, CC #3).

As shown in FIG. 4A, the user terminal may apply DCI format 2_2/2_3 transmitted from CC #1 to each channel on CC #1. The user terminal may apply DCI format 2_2/2_3 transmitted from CC #2 and CC #3 to each channel on CC #2.

The user terminal may apply the TPC command included in DCI format 2_2/2_3 to each channel to perform the transmission power control.

(Aspect 1-4)

The user terminal may be configured to monitor DCI format 2_2 or DCI format 2_3 that is cyclic redundancy check (CRC)-scrambled with an identifier for the TPC of the PUSCH (TPC-PUSCH-RNTI) on one or a plurality of serving cells (component carriers) for the cell group or the PUCCH group.

The base station can configure the user terminal such that the user terminal monitors DCI format 2_2/2_3 for a certain cell group (CG) or PUCCH group on one or a plurality of serving cells (component carriers).

The user terminal monitors, for each channel (PUSCH, PUCCH, SRS) on one serving cell (component carrier), only DCI format 2_2/2_3 on the identical carrier.

In Aspect 1-4, the user terminal may monitor DCI format 2_2/2_3 as shown in FIG. 4B.

As shown in FIG. 4B, the user terminal monitors DCI format 2_2/2_3 on one or a plurality of component carriers (CC #1, CC #2, CC #3). The user terminal applies, to each channel (PUSCH, PUCCH, SRS) on each component carrier (CC #1, CC #2, CC #3), DCI format 2_2/2_3 transmitted from the identical component carrier (CC #1, CC #2, CC #3) .

In FIG. 4B, the user terminal applies, to each channel on CC #1, DCI format 2_2/2_3 transmitted from identical carrier CC #1. The user terminal applies, to each channel on CC #2, DCI format 2_2/2_3 transmitted from identical carrier CC #2. The user terminal applies, to each channel on CC #3, DCI format 2_2/2_3 transmitted from identical carrier CC #3.

The user terminal may apply the TPC command included in DCI format 2_2/2_3 to each channel to perform the transmission power control.

(Aspect 1-5)

The user terminal may be configured to monitor DCI format 2_2 that is cyclic redundancy check (CRC)-scrambled with an identifier for the TPC of the PUCCH (TPC-PUCCH-RNTI) on one or a plurality of serving cells (component carriers) for the cell group or the PUCCH group.

The user terminal does not expect to receive a value different for the TPC command transmitted on a different serving cell (component carrier) on the identical monitoring occasion or the overlapping monitoring occasions. In other words, the user terminal expects that a plurality of TPC commands received at a certain timing have a common value for a PUCCH cell in one serving cell (component carrier).

The base station can configure the user terminal such that the user terminal monitors DCI format 2_2 for a certain cell group (CG) or PUCCH group on one or a plurality of serving cells (component carriers). The base station does not generate a plurality of TPC commands having different values for a certain PUCCH to which the TPC command for a cell is applied, the TPC command being applied to the cell.

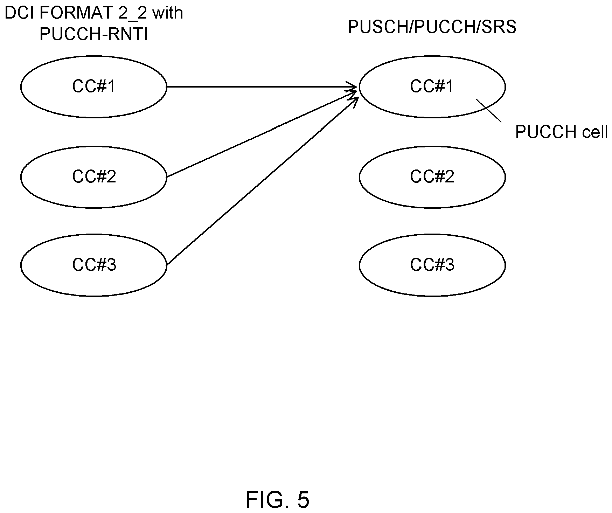

In Aspect 1-5, the user terminal may monitor DCI format 2_2 as shown in FIG. 5.

As shown in FIG. 5, the user terminal monitors DCI format 2_2 on one or a plurality of component carriers (CC #1, CC #2, CC #3). The user terminal applies the TPC command having the common value only once to the PUCCH on one component carrier (CC #1) to perform the transmission power control.

(Aspect 1-6)

The user terminal may be configured to monitor only DCI format 2_2 that is cyclic redundancy check (CRC)-scrambled with an identifier for the TPC of the PUCCH (TPC-PUCCH-RNTI) on the PCell or the PSCell for the PUCCH transmission on the PCell or the PSCell.

The base station can configure the user terminal to monitor only DCI format 2_2 on the PCell or the PSCell.

The user terminal may be configured not to monitor DCI format 2_2 on the SCell carrying the PUCCH for the PUCCH transmission on the SCell. In this case, the user terminal may be configured to monitor DCI format 2_2 notified in the common search space on the PCell.

The user terminal may be configured to monitor DCI format 2_2 on the SCell carrying the PUCCH for the PUCCH transmission on the SCell.

A different TPC index (tpc-index) may be notified in DCI format 2_2 CRC-scrambled with the common TPC-PUCCH-RNTI for the PUCCH transmission on the PCell and the PUCCH transmission on the SCell. For example, the higher layer may configure TPC index 1 for the PCell and TPC index 2 for the SCell transmitting the PUCCH.

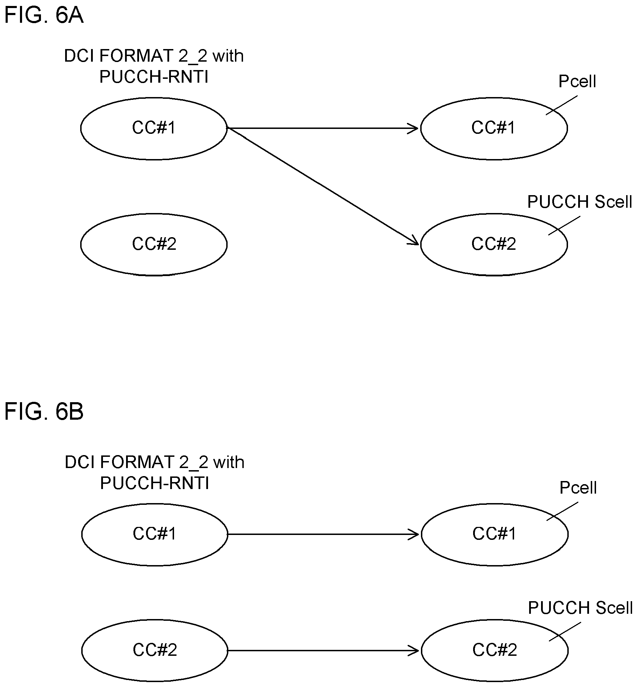

In Aspect 1-6, the user terminal may monitor DCI format 2_2 as shown in FIG. 6.

As shown in FIG. 6A, the user terminal may monitor DCI format 2_2 transmitted not on the SCell (CC #2) but on the PCell (CC #1) for the SCell (CC #2) carrying the PUCCH. The user terminal may monitor DCI format 2_2 transmitted on the PCell (CC #1) for the PCell (CC #1) carrying the PUCCH.

As shown in FIG. 6B, the user terminal may monitor DCI format 2_2 transmitted on the SCell (CC # #2) for the SCell (CC #2) carrying the PUCCH. The user terminal may monitor DCI format 2_2 transmitted on the PCell (CC #1) for the PCell (CC #1) carrying the PUCCH.

(Variations)

For the future radio communication systems, a study is underway to use a plurality of carriers including a carrier specialized in the uplink (UL) transmission (performing only the UL transmission) to perform communication. Performing only the UL transmission is also referred to as SUL (Supplemental Uplink).

In a case of the user terminal configured with a normal UL and the SUL for a certain cell, the TPC command included in DCI format 2_2/2_3 for transmission of a plurality of channels (PUSCH, PUCCH, SRS) in the UL and the SUL may be separated using the different TPC index. In this case, the user terminal may use a UL/SUL indicator field value from the detected DCI to decide which carrier the TPC command is applied to.

Alternatively, the TPC command may be separated using a different RNTI. The TPC command may be common. The TPC command included in DCI format 2_2/2_3 may be applied only to the normal uplink (UL).

The first aspect clarifies the applying of a certain DCI format in a case that the certain DCI format (for example, DCI format 2_2/2_3) is transmitted on a plurality of component carriers (CCs) in the future radio communication systems (for example, NR). This allows the user terminal to appropriately apply the TPC command included in the certain DCI format to perform the transmission power control even in the case that the certain DCI format (for example, DCI format 2_2/2_3) is transmitted on the plurality of component carriers (CCs).

(Second Aspect)

A second aspect describes a receiving operation in the user terminal in a case that a plurality of certain DCI formats (for example, DCI format 2_2/2_3) are transmitted in the future radio communication systems (for example, NR).

In the future radio communication systems (for example, NR), the power control adjustment states of the PUSCH on the transmission period (transmission occasion) i for a UL bandwidth part (BWP) b of the carrier f of the serving cell c may be expressed by Equation (3) below.

[Math. 3]

Equation (3)

$$\delta_{\mathrm{PUSCH}b,f,c}(i_{\mathrm{last}},i,K_{\mathrm{PUSCH}},l) = \delta_{\mathrm{PUSCH}b,f,c}(i_{\mathrm{last}},i,K_{\mathrm{PUSCH}},l) + \sum_{m=0}^{M-1}\delta_{\mathrm{PUSCH}b,f,c}(i_{\mathrm{last}},i,K_{\mathrm{PUSCH}}(m),l)$$

In Equation (3), a left side represents a correction value corresponding to the TPC command. $i_{\mathrm{last}}$ represents a PUSCH transmission occasion immediately before the PUSCH transmission occasion i. In a case that in the PUSCH transmission occasions i and $i_{\mathrm{last}}$ in the UL bandwidth part (BWP) b of the carrier f of the serving cell c, a response is performed to detection of DCI format 0_0 or DCI format 0_1 by the user terminal, M represents the number of DCI formats 2_2 CRC-scrambled with the TPC-PUSCH-RNTI that the user terminal receives on the corresponding PDCCH.

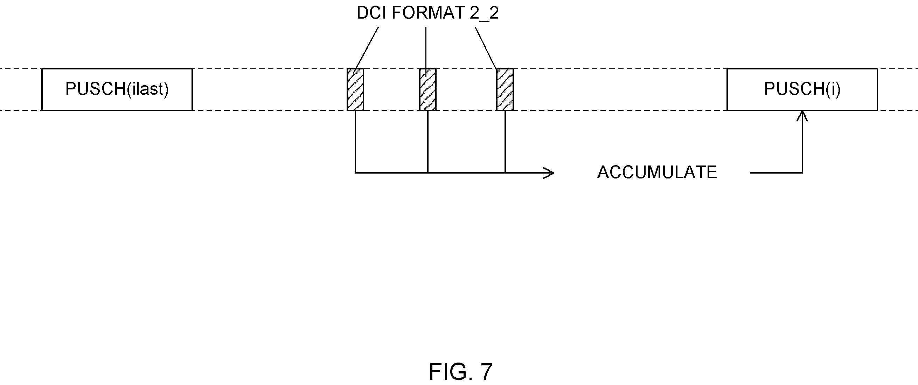

FIG. 7 is a diagram to show an example of the power control adjustment state of the PUSCH on the transmission occasion i in the future radio communication systems (for example, NR). As shown in FIG. 7, the user terminal has the PUSCH transmission occasion i (PUSCH(i)) and the PUSCH transmission occasion ilast (PUSCH ($i_{\mathrm{last}}$)) immediately before the former. The user terminal receives M DCI formats 2_2 after a last symbol of the corresponding PDCCH for the PUSCH transmission occasion $i_{\mathrm{last}}$ and before a last symbol of the corresponding PDCCH for the PUSCH transmission occasion i. The user terminal accumulates the TPC commands included in M received DCI formats 2_2 to perform the transmission power control of the PUSCH on the transmission occasion i.

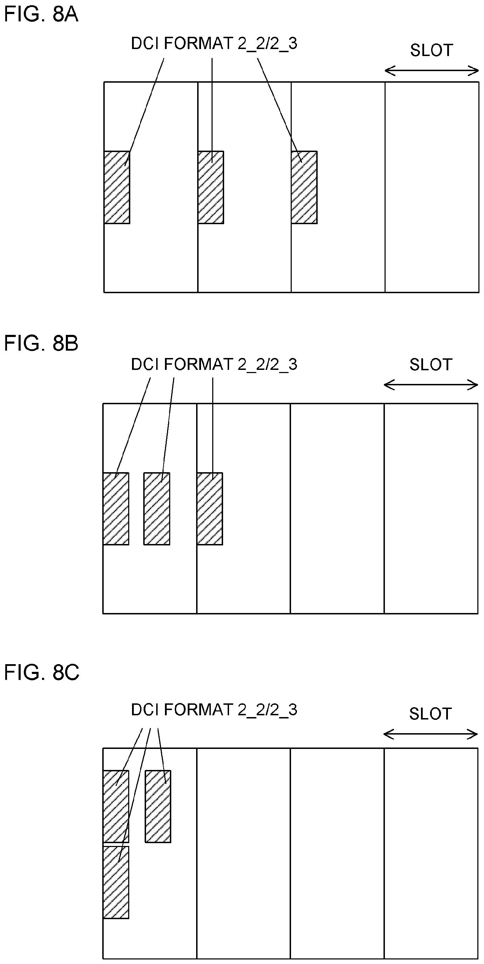

FIGS. 8A and 8B are diagrams to show examples of a reception timing of DCI format 2_2/2_3 according to the second aspect.

(Aspect 2-1)

The user terminal may be configured not to expect to receive a plurality of DCI formats 2_2/2_3 in a certain slot, in the serving cell, the cell group, or the PUCCH group. In this case, once the user terminal detects DCI format 2_2/2_3 in the serving cell, the cell group, or the PUCCH group, the user terminal can perform the control assuming that DCI format 2_2/2_3 is not detected again in the same slot, and thus, the transmission power control can be simplified.

The base station controls the user terminal such that the user terminal transmits DCI format 2_2/2_3 only once per slot in the serving cell, the cell group, or the PUCCH group.

The user terminal may receive one DCI format 2_2/2_3 in a certain slot as shown in FIG. 8A.

(Aspect 2-2)

The user terminal may be configured not to expect to receive a plurality of DCI formats 2_2/2_3 on a certain PDCCH monitoring occasion or overlapping PDCCH monitoring occasions, in the serving cell, the cell group, or the PUCCH group. In this case, once the user terminal detects DCI format 2_2/2_3 on the certain PDCCH monitoring occasion or the overlapping PDCCH monitoring occasions in the serving cell, the cell group, or the PUCCH group, the user terminal can perform the control assuming that DCI format 2_2/2_3 is not detected again in the same slot, and thus, the transmission power control can be simplified.

The base station controls the user terminal such that the user terminal transmits DCI format 2_2/2_3 only once per slot on the certain PDCCH monitoring occasion or the overlapping PDCCH monitoring occasions in the serving cell, the cell group, or the PUCCH group.

The user terminal may receive one DCI format 2_2/2_3 on the certain PDCCH monitoring occasion or the overlapping PUCCH monitoring occasions as shown in FIG. 8B. The user terminal may receive one DCI format 2_2/2_3 on the certain PDCCH monitoring occasion or the overlapping PUCCH monitoring occasions as shown in FIG. 8A.

(Aspect 2-3)

The user terminal may be configured to receive a plurality of DCI formats 2_2/2_3 in a certain slot, in the serving cell, the cell group, or the PUCCH group. In this case, a plurality of TPC commands can be easy to transmit or receive collectively, and thus, the transmission power control can be made more efficient.

The base station controls the user terminal such that the user terminal transmits a plurality of DCI formats 2_2/2_3 in a certain slot, in the serving cell, the cell group, or the PUCCH group.

The user terminal may receive a plurality of DCI formats 2_2/2_3 in a certain slot as shown in FIG. 8C. The user terminal may receive a plurality of DCI formats 2_2/2_3 in a certain slot as shown in FIG. 8B.

The user terminal may receive one DCI format 2_2/2_3 in a case that one DCI format 2_2/2_3 is transmitted in a certain slot as shown in FIG. 8A.

The second aspect clarifies the receiving operation in the user terminal in the case that a plurality of certain DCI formats (for example, DCI format 2_2/2_3) are transmitted in the future radio communication systems (for example, NR). This allows the user terminal to appropriately perform the receiving operation even in the case that the plurality of certain DCI formats (for example, DCI format 2_2/2_3) are transmitted.

(Third Aspect)

A third aspect describes a relationship between an accumulation timing for the TPC command and the user terminal capability in the future radio communication systems (for example, NR) .

(Aspect 3-1)

The accumulation timing for the TPC command included in DCI format 2_2/2_3 may be configured not to depend on a processing time capability of the user terminal.

The base station can configure the user terminal such that the accumulation timing for the TPC command included in DCI format 2_2/2_3 does not depend on the processing time capability of the user terminal.

In this case, the user terminal may be requested to apply the TPC command included in DCI format 2_2/2_3 at a timing that is X symbols after from a last symbol where DCI format 2_2/2_3 is received, regardless of the user terminal processing time capability (#1 or #2).

(Aspect 3-2)

The accumulation timing for the TPC command included in DCI format 2_2/2_3 may be configured to depend on the processing time capability of the user terminal.

The base station can configure the user terminal such that the accumulation timing for the TPC command included in DCI format 2_2/2_3 depends on the processing time capability of the user terminal.

In a case of being configured with user terminal processing time capability #1, the user terminal may be requested to apply the TPC command included in DCI format 2_2/2_3 at a timing that is X symbols after from a last symbol where DCI format 2_2/2_3 is received.

In a case of being configured with user terminal processing time capability #2, the user terminal may be requested to apply the TPC command included in DCI format 2_2/2_3 at a timing that is Y (X > Y) symbols after from a last symbol where DCI format 2_2/2_3 is received.

The third aspect clarifies the relationship between the accumulation timing for the TPC command and the user terminal capability in the future radio communication systems (for example, NR). This allows the user terminal to appropriately control the accumulation timing for the TPC command.

(Fourth Aspect)

A fourth aspect describes a condition under which the user terminal accumulates a plurality of TPC commands in the future radio communication systems (for example, NR).

(Aspect 4-1)

The user terminal that is configured with the TPC command in DCI format 2_2/2_3 for each channel (PUSCH, PUCCH, SRS) on a certain serving cell may be configured not to be requested to accumulate a plurality of TPC commands.

(Aspect 4-2)

The user terminal that is configured with the TPC command in DCI format 2_2/2_3 for each channel (PUSCH, PUCCH, SRS) on a certain serving cell may be configured to be requested to accumulate a plurality of TPC commands under a condition. The condition may be a case that, for example, at least one of DCI format 2_2 and DCI format 0_0/1_0 including the TPC command is detected on a different PDCCH monitoring occasion. The condition may be a case that, for example, at least one of DCI format 2_2 and DCI format 0_0/1_0 including the TPC command is detected in a different search space. The condition may be a case that, for example, at least one of DCI format 2_2 and DCI format 0_0/1_0 including the TPC command is detected in a different cell.

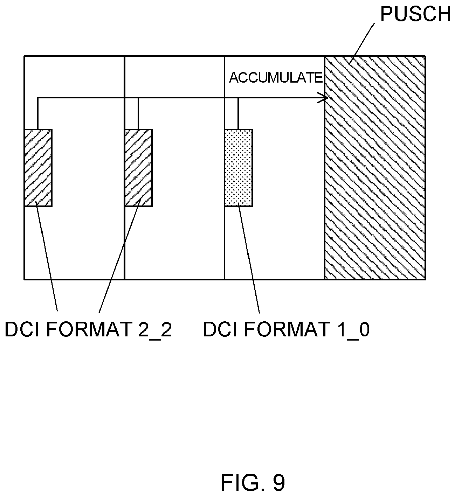

FIG. 9 is a diagram to show an example to which Aspect 4-2 is applied. As shown in FIG. 9, the user terminal detects DCI format 2_2 and DCI format 1_0 on the different PDCCH monitoring occasions. In this case, the user terminal may accumulate the TPC commands included in DCI format 2_2 and DCI format 1_0 for the PUSCH on a certain serving cell to control the transmission power.

The fourth aspect clarifies the condition under which the user terminal accumulates a plurality of TPC commands in the future radio communication systems (for example, NR). This allows the user terminal to appropriately control the accumulation of the plurality of TPC commands in accordance with the condition.

(Fifth Aspect)

A fifth aspect describes a flexible scheduling timing and the applying of the TPC command in the future radio communication systems (for example, NR) with reference to FIG. 2 again.

(Aspect 5-1)

The user terminal may be configured to accumulate, for applying, on a transmission (PUSCH #2 in FIG. 2) scheduled after a firstly scheduled transmission (PUSCH #1 in FIG. 2), a TPC command included in DCI (DCI #1 in FIG. 2) transmitted before DCI (DCI #2 in FIG. 2) for scheduling the former transmission.

In the example shown in FIG. 2, the user terminal may accumulate TPC command 1 on the transmission of PUSCH #2 scheduled by DCI #2 including TPC command 2. In this case, a value obtained by accumulating TPC command 0, TPC command 1, and TPC command 2 is applied to the transmissions of PUSCH #1 and PUSCH #2.

(Aspect 5-2)

The user terminal may be configured not to accumulate, for applying, on a transmission (PUSCH #2 in FIG. 2) scheduled after a firstly scheduled transmission (PUSCH #1 in FIG. 2), a TPC command included in DCI (DCI #1 in FIG. 2) scheduling a transmission after the former transmission.

In the example shown in FIG. 2, the user terminal may not accumulate TPC command 1 on the transmission of PUSCH #2 scheduled by DCI #2 including TPC command 2. The user terminal may apply a value obtained by accumulating TPC command 0 and TPC command 2 on the transmission of PUSCH #2. In this case, a value of TPC command 1 may be applied in a PUSCH transmission after PUSCH #2. Alternatively, the value of TPC command 1 may be controlled not to be included in the TPC command accumulation control (or TPC command 1 is discarded).

In the example shown in FIG. 2, the user terminal may or may not accumulate TPC command 2 on the transmission of PUSCH #1 scheduled by DCI #1 including TPC command 1. The user terminal may apply a value obtained by accumulating TPC command 0, TPC command 1, and TPC command 2, or a value obtained by accumulating TPC command 0 and TPC command 1 on the transmission of PUSCH #1.

The fifth aspect clarifies the flexible scheduling timing and the applying of the TPC command in the future radio communication systems (for example, NR). This allows the user terminal to appropriately apply the TPC command in the flexible NR scheduling.

(Radio Communication System)

Hereinafter, a structure of a radio communication system according to the present embodiment will be described. In this radio communication system, a radio communication method according to the embodiment described above is adopted.

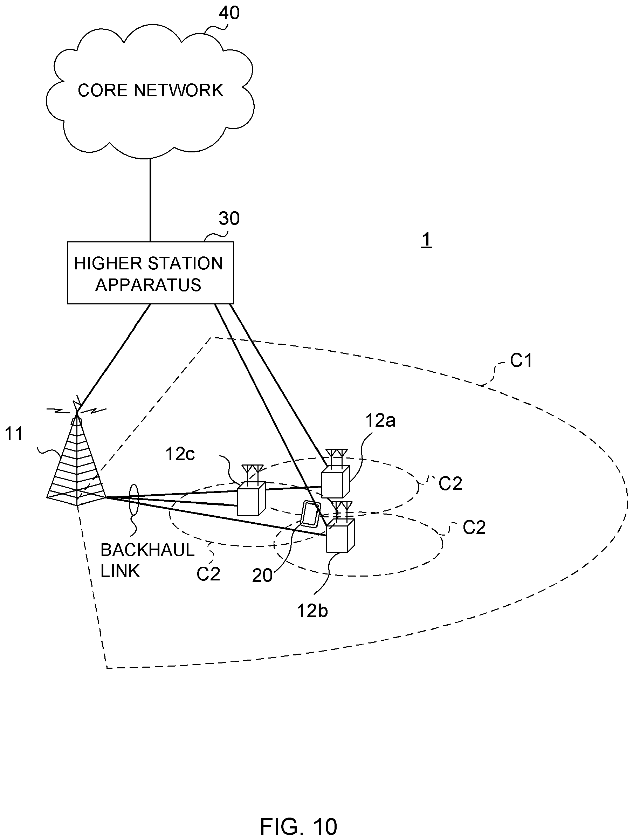

FIG. 10 is a diagram to show an example of a schematic structure of the radio communication system according to the present embodiment. A radio communication system 1 can adopt carrier aggregation (CA) or dual connectivity (DC) to group a plurality of fundamental frequency blocks (component carriers) into one, where the system bandwidth in an LTE system (for example, 20 MHz) constitutes one unit. The radio communication system 1 may be referred to as SUPER 3G, LTE-A (LTE-Advanced), IMT-Advanced, 4G, 5G, FRA (Future Radio Access), NR (New Rat), and the like.

The radio communication system 1 includes a base station 11 that forms a macro cell C1, and base stations 12a to 12c that form small cells C2, which are placed within the macro cell C1 and which are narrower than the macro cell C1. User terminals 20 are placed in the macro cell C1 and in each small cell C2. Numerologies different from each other between the cells may be adopted. The numerologies refer to a set of communication parameters characterizing a signal design in a RAT and a RAT design.

The user terminal 20 can connect with both the base station 11 and the base stations 12. The user terminal 20 may use the macro cell C1 and the small cells C2 at the same time by means of the carrier aggregation (CA) or the dual connectivity (DC), the macro cell C1 and the small cells C2 using frequencies different from each other. The user terminal 20 may adopt the carrier aggregation (CA) or the dual connectivity (DC) by using a plurality of cells (CCs) (for example, two or more CCs). The user terminal can use a licensed band CC and an unlicensed band CC as the plurality of cells. A TDD carrier adopting a shortened TTI may be configured to be included in any one of a plurality of cells.

Between the user terminals 20 and the base station 11, communication can be carried out using a carrier of a relatively low frequency band (for example, 2 GHz) and a narrow bandwidth (also referred to as an "existing carrier," a "Legacy carrier," and so on). Between the user terminals 20 and the base stations 12, a carrier of a relatively high frequency band (for example, 3.5 GHz, 5 GHz, 30 to 70 GHz, and so on) and a wide bandwidth may be used, or the same carrier as that used between the user terminals 20 and the base station 11 may be used. Note that the structure of the frequency band for use in each base station is by no means limited to these.

A wired connection (for example, an optical fiber in compliance with the CPRI (Common Public Radio Interface), an X2 interface, and so on) or a wireless connection may be established between the base station 11 and the base stations 12 (or between two base stations 12).

The base station 11 and the base stations 12 are each connected with a higher station apparatus 30, and are connected with a core network 40 via the higher station apparatus 30. The higher station apparatus 30 may be, for example, an access gateway apparatus, a radio network controller (RNC), a mobility management entity (MME), and so on, but is by no means limited to these. Each base station 12 may be connected with the higher station apparatus 30 via the base station 11.

The base station 11 is a base station having a relatively wide coverage, and may be referred to as a macro base station, a central node, an eNB (eNodeB), a transmission/reception point, and so on. The base stations 12 are base stations having local coverages, and may be referred to as small base stations, micro base stations, pico base stations, femto base stations, HeNBs (Home eNodeBs), RRHs (Remote Radio Heads), transmission/reception points, and so on. Hereinafter, the base stations 11 and 12 will be collectively referred to as "base stations 10," unless specified otherwise.

Each of the user terminals 20 is a terminal that supports various communication schemes such as LTE and LTE-A, and may include not only mobile communication terminals but also stationary communication terminals.

In the radio communication system 1, as radio access schemes, an OFDMA (orthogonal frequency division multiple access) can be applied to the downlink (DL), and an SC-FDMA (single-carrier frequency division multiple access) can be applied to the uplink (UL). OFDMA is a multi-carrier communication scheme to perform communication by dividing a frequency band into a plurality of narrow frequency bands (subcarriers) and mapping data to each subcarrier. The SC-FDMA is a single carrier communication scheme to mitigate interference between terminals by dividing the system bandwidth into bands including one or continuous resource blocks per terminal, and allowing a plurality of terminals to use mutually different bands. Note that the uplink and downlink radio access schemes are by no means limited to the combinations of these, and the OFDMA may be used for the UL.

In the radio communication system 1, a downlink data channel (also referred to as PDSCH (Physical Downlink Shared Channel), downlink shared channel, or the like) shared by the user terminals 20, a broadcast channel (PBCH (Physical Broadcast Channel)), L1/L2 control channels, and so on are used as the DL channels. User data, higher layer control information, SIBs (System Information Blocks) and so on are communicated on the PDSCH. MIBs (Master Information Blocks) are communicated on the PBCH.

The L1/L2 control channels include a downlink control channel (a PDCCH (Physical Downlink Control Channel), an EPDCCH (Enhanced Physical Downlink Control Channel)), a PCFICH (Physical Control Format Indicator Channel), a PHICH (Physical Hybrid-ARQ Indicator Channel) and so on. The downlink control information (DCI) including PDSCH and PUSCH scheduling information, and so on are communicated on the PDCCH. The number of OFDM symbols used for the PDCCH is communicated on the PCFICH. HARQ acknowledgment information (ACK/NACK) for the PUSCH is communicated on the PHICH. The EPDCCH is frequency-division multiplexed with the PDSCH (downlink shared data channel) and used to communicate the DCI and so on, like the PDCCH.

In the radio communication system 1, an uplink data channel (also referred to as PUSCH (Physical Uplink Shared Channel), uplink shared channel, or the like) shared by the user terminals 20, an uplink control channel (PUCCH (Physical Uplink Control Channel)), a random access channel (PRACH (Physical Random Access Channel)), and so on are used as the UL channels. User data and higher layer control information are communicated on the PUSCH. Uplink control information (UCI) including at least one of the acknowledgment information (ACK/NACK), radio quality information (CQI), and the like is communicated on the PUSCH or the PUCCH. Random access preambles for establishing connections with the cells are communicated on the PRACH.

<Base Station>

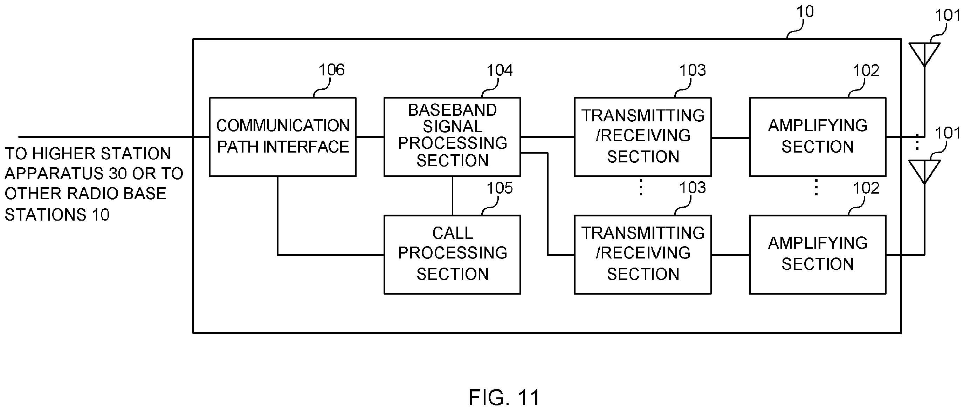

FIG. 11 is a diagram to show an example of an overall structure of the base station according to the present embodiment. The base station 10 includes a plurality of transmitting/receiving antennas 101, amplifying sections 102, transmitting/receiving sections 103, a baseband signal processing section 104, a call processing section 105, and a communication path interface 106. The base station 10 may be configured to include one or more transmitting/receiving antennas 101, one or more amplifying sections 102, and one or more transmitting/receiving sections 103. The base station 10 may be a transmission apparatus of downlink data or a reception apparatus of uplink data.

The downlink data to be transmitted from the base station 10 to the user terminal 20 is input from the higher station apparatus 30 to the baseband signal processing section 104, via the communication path interface 106.

In the baseband signal processing section 104, the downlink data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. The downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, into radio frequency bands, and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can include transmitters/receivers, transmitting/receiving circuits or transmitting/receiving apparatus that can be described based on general understanding of the technical field to which the present invention pertains. The transmitting/receiving section 103 may be structured as a transmitting/receiving section in one entity, or may include a transmitting section and a receiving section.

As for the uplink signals, the radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signals through frequency conversion and output the baseband signals to the baseband signal processing section 104.

In the baseband signal processing section 104, the user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as configuring and releasing the communication channels, manages the state of the base station 10, and manages the radio resources.

The communication path interface 106 transmits and/or receives signals to and/or from the higher station apparatus 30 via a certain interface. The communication path interface 106 may transmit and/or receive signals (backhaul signaling) with other base stations 10 via an inter-base station interface (for example, an optical fiber in compliance with the CPRI (Common Public Radio Interface) and an X2 interface).

The transmitting/receiving sections 103 transmit downlink signals (for example, downlink control signals (downlink control channels), downlink data signals (downlink data channel, downlink shared channel), downlink reference signals (DM-RS, CSI-RS, and so on), discovery signals, synchronization signals, broadcast signals, and so on). The transmitting/receiving sections 103 receive uplink signals (for example, uplink control signals (uplink control channel), uplink data signals (uplink data channel, uplink shared channel), uplink reference signals, and so on) .

The transmitting/receiving sections 103 may transmit the downlink control information (DCI) including the transmission power control (TPC) command applied to uplink transmission. The transmitting/receiving sections 103 may transmit a second DCI before a first DCI, the first DCI for scheduling a first uplink transmission, the second DCI for scheduling a second uplink transmission and having a transmission occasion after or before the first uplink transmission.

A transmitting section and a receiving section according to the present invention include both or any one of the transmitting/receiving section 103 and the communication path interface 106.

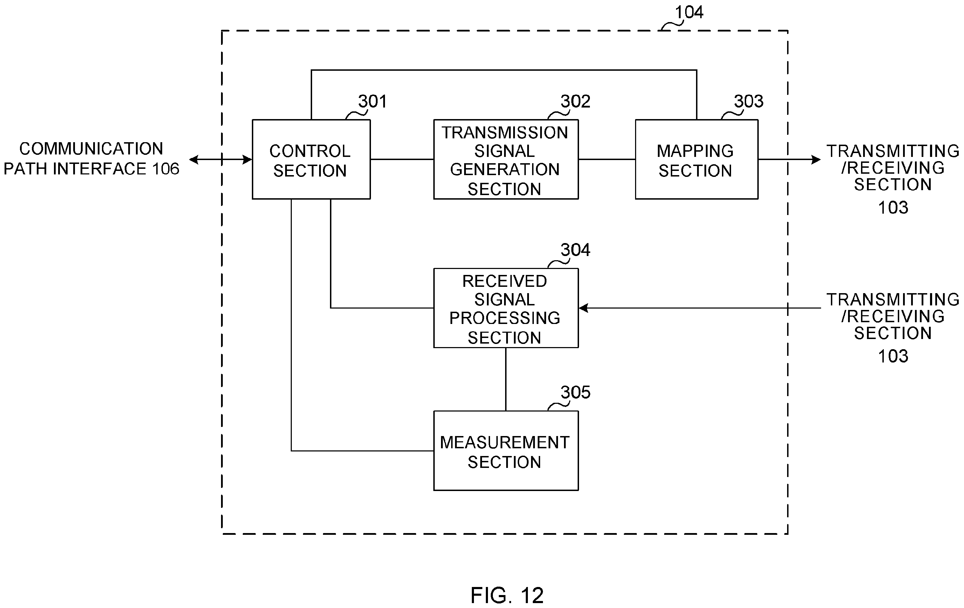

FIG. 12 is a diagram to show an example of a functional structure of the base station according to the present embodiment. This figure primarily shows functional blocks that pertain to characteristic parts of the present embodiment, and the base station 10 may also include other functional blocks that are necessary for radio communication as well. The baseband signal processing section 104 at least includes a control section 301, a transmission signal generation section 302, a mapping section 303, a received signal processing section 304, and a measurement section 305.

The control section 301 controls the whole of the base station 10. The control section 301 can include a controller, a control circuit or a control apparatus that can be described based on general understanding of the technical field to which the present invention pertains.

The control section 301, for example, controls the generation of signals by the transmission signal generation section 302, the mapping of signals by the mapping section 303, and so on. The control section 301 controls the signal receiving processes by the received signal processing section 304, the measurements of signals by the measurement section 305, and so on.

The control section 301 controls the scheduling of the downlink signal and the uplink signal (for example, resource allocation). Specifically, the control section 301 controls the transmission signal generation section 302, the mapping section 303, and the transmitting/receiving section 103 to generate and transmit the DCI (DL assignment, DL grant) including scheduling information of the downlink data channel and the DCI (UL grant) including scheduling information of the uplink data channel.

The transmission signal generation section 302 generates downlink signals (downlink control channel, downlink data channel, downlink reference signals such as DM-RS, and so on) based on commands from the control section 301 and outputs the generated downlink signals to the mapping section 303. The transmission signal generation section 302 can include a signal generator, a signal generation circuit or a signal generation apparatus that can be described based on general understanding of the technical field to which the present invention pertains.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. The received signals are, for example, uplink signals that are transmitted from the user terminals 20 (uplink control channel, uplink data channel, uplink reference signals, and so on). The received signal processing section 304 can be constituted with a signal processor, a signal processing circuit or signal processing apparatus that can be described based on general understanding of the technical field to which the present invention pertains.

The received signal processing section 304 outputs the information decoded by the receiving process to the control section 301. For example, the reception processing section 304 outputs at least one of the preamble, the control information, and the UL data to the control section 301. The received signal processing section 304 outputs the received signals and the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present invention pertains.

The measurement section 305 may measure, for example, a received power of the received signal (for example, RSRP (Reference Signal Received Power)), a received quality (for example, RSRQ (Reference Signal Received Quality)), a channel state, or the like. The measurement results may be output to the control section 301.

<User Terminal>

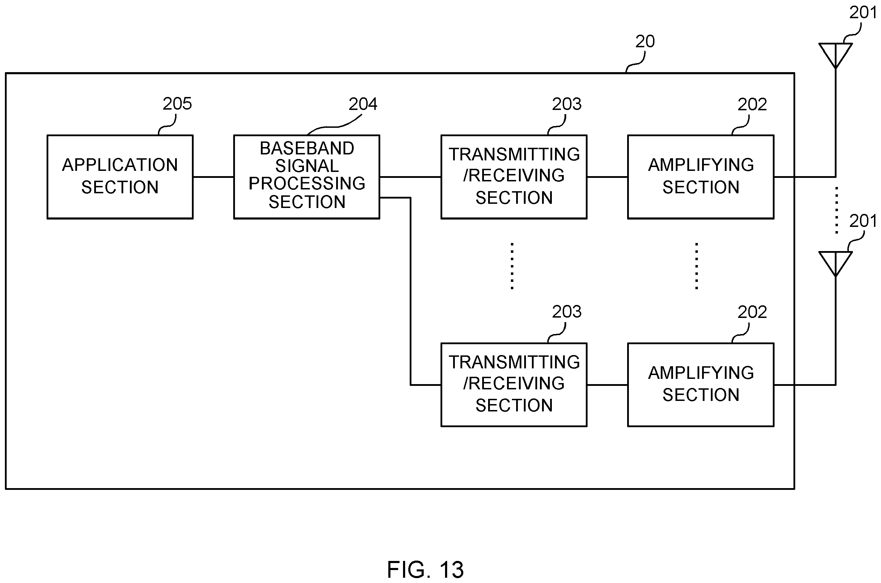

FIG. 13 is a diagram to show an example of an overall structure of the user terminal according to the present embodiment. A user terminal 20 includes a plurality of transmitting/receiving antennas 201, amplifying sections 202, transmitting/receiving sections 203, a baseband signal processing section 204 and an application section 205. The base station 10 may be configured to include one or more transmitting/receiving antennas 201, one or more amplifying sections 202, and one or more transmitting/receiving sections 203. The user terminal 20 may be a reception apparatus of downlink data or a transmission apparatus of uplink data.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present invention pertains. The transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink data is forwarded to the application section 205. The application section 205 performs processes related to higher layers above the physical layer and the MAC layer, and so on. The system information and the higher layer control information among the downlink data are also forwarded to the application section 205.

The UL data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 receive downlink signals (for example, downlink control signals (downlink control channel), downlink data signals (downlink data channel, downlink shared channel), downlink reference signals (DM-RS, CSI-RS, and so on), discovery signals, synchronization signals, broadcast signals, and so on). The transmitting/receiving sections 203 transmit uplink signals (for example, uplink control signals (uplink control channel), uplink data signals (uplink data channel, uplink shared channel), uplink reference signals, and so on) .

The transmitting/receiving sections 203 may receive the downlink control information (DCI) including the transmission power control (TPC) command applied to uplink transmission on one or more component carriers. The transmitting/receiving sections 203 may transmit a second DCI before a first DCI, the first DCI for scheduling a first uplink transmission, the second DCI for scheduling a second uplink transmission and having a transmission occasion after or before the first uplink transmission.

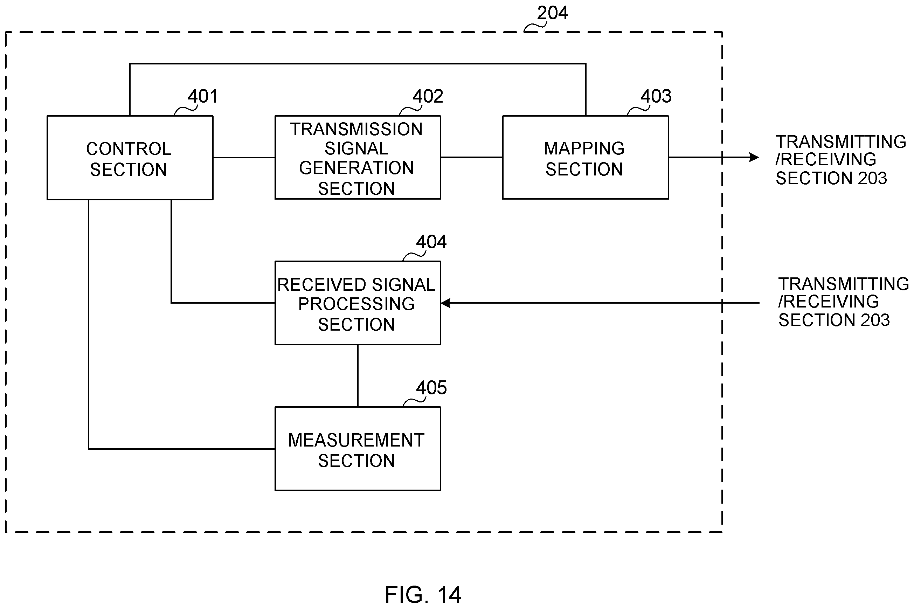

FIG. 14 is a diagram to show an example of a functional structure of the user terminal according to the present embodiment. This figure primarily shows functional blocks that pertain to characteristic parts of the present embodiment, and the user terminal 20 may also include other functional blocks that are necessary for radio communication as well. The baseband signal processing section 204 provided in the user terminal 20 at least includes a control section 401, a transmission signal generation section 402, a mapping section 403, a received signal processing section 404 and a measurement section 405.

The control section 401 controls the whole of the user terminal 20. The control section 401 can be constituted with a controller, a control circuit or control apparatus that can be described based on general understanding of the technical field to which the present invention pertains.

The control section 401, for example, controls the generation of signals by the transmission signal generation section 402, the mapping of signals by the mapping section 403, and so on. The control section 401 controls the signal receiving processes by the received signal processing section 404, the measurements of signals by the measurement section 405, and so on.

The control section 401 may control such that the DCI is monitored in a certain component carrier where a monitoring operation on the DCI is indicated. The control section 401 may assume that the monitoring operation on the DCI is not configured for a plurality of component carriers. The control section 401 may control such that the DCI is monitored on a plurality of component carriers.

The control section 401 may assume that it is not configured to receive a plurality of the DCI per slot. The control section 401 may set the accumulation timing for the TPC command depending on the processing time capability of the user terminal.

The control section 401 may control to accumulatively apply a TPC command included in the second DCI for scheduling the second uplink transmission transmitted before the first DCI for scheduling the first uplink transmissionto the first uplink transmission and the second uplink transmission transmitted after the first uplink transmission.

The transmission signal generation section 402 generates uplink signals (uplink control channel, uplink data channel, uplink reference signals and so on) based on commands from the control section 401, and outputs the generated uplink signals to the mapping section 403. The transmission signal generation section 402 can be constituted with a signal generator, a signal generation circuit or signal generation apparatus that can be described based on general understanding of the technical field to which the present invention pertains.

The transmission signal generation section 402 generates an uplink data channel, based on commands from the control section 401. For example, in a case that an UL grant is included in the downlink control channel notified from the base station 10, the transmission signal generation section 402 is instructed to generate the uplink data channel by the control section 401.

The mapping section 403 maps the uplink signals generated in the transmission signal generation section 402 to radio resources, based on commands from the control section 401, and outputs the result to the transmitting/receiving sections 203. The mapping section 403 can include a mapper, a mapping circuit or a mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. The received signals include, for example, downlink signals (downlink control channel, downlink data channel, downlink reference signals, and so on) transmitted from the base station 10. The received signal processing section 404 can be constituted with a signal processor, a signal processing circuit or signal processing apparatus that can be described based on general understanding of the technical field to which the present invention pertains. The received signal processing section 404 can constitute the receiving section according to the present invention.

The received signal processing section 404 blind-decodes the downlink control channel scheduling the transmission and reception of the downlink data channel based on commands from the control section 401 to perform a receiving process of the downlink data channel based on the DCI. The received signal processing section 404 estimates a channel gain based on the DM-RS or the CRS, and demodulates the downlink data channel, based on the estimated channel gain.

The received signal processing section 404 outputs the information decoded in the receiving process to the control section 401. The received signal processing section 404 outputs, for example, the broadcast information, system information, RRC signaling, DCI and so on, to the control section 401. The received signal processing section 404 may output the data decoding result to the control section 401. The received signal processing section 404 outputs the received signals or the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present invention pertains.

The measurement section 405 may measure, for example, a received power of the received signal (for example, RSRP), a DL received quality (for example, RSRQ), a channel state, or the like. The measurement results may be output to the control section 401.

(Hardware Structure)

The block diagrams that have been used to describe the above embodiments show blocks in functional units. These functional blocks (components) may be implemented in arbitrary combinations of at least one of hardware and software. The method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software with one apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

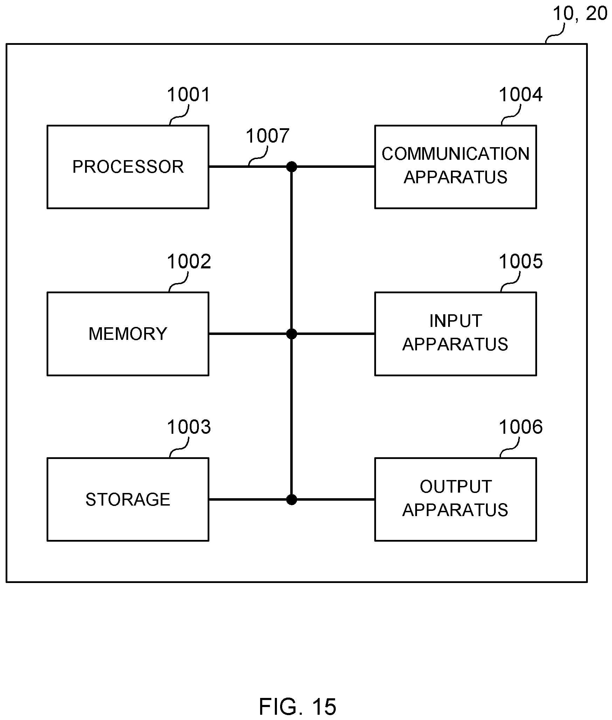

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to an embodiment. Physically, the above-described base station 10 and user terminals 20 may each be formed as a computer apparatus that includes a processor 1001, a memory 1002, a storage 1003, a communication apparatus 1004, an input apparatus 1005, an output apparatus 1006, a bus 1007, and so on.

In the following description, the word "apparatus" may be interpreted as "circuit," "device," "unit," and so on. The hardware structure of the base station 10 and the user terminals 20 may be designed to include one or a plurality of apparatuses shown in the drawings, or may be designed not to include part of pieces of apparatus.

For example, although only one processor 1001 is shown, a plurality of processors may be provided. The processes may be implemented with one processor or may be implemented at the same time, in sequence, or in different manners with two or more processors. The processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

The processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may include, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004. The transmitting/receiving section 103 may be implemented to be physically or logically separated into a transmitting section 103a and a receiving section 103b.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). The input apparatus 1005 and the output apparatus 1006 may be provided in an integrated structure (for example, a touch panel).

These types of apparatus, including the processor 1001, the memory 1002, and others, are connected by a bus 1007 for communicating information. The bus 1007 may be formed with a single bus, or may be formed with buses that vary between pieces of apparatus.

The base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented by at least one of these pieces of hardware.

(Variations)

The terminology described in the present disclosure and the terminology that is needed to understand the present disclosure may be replaced by other terms that convey the same or similar meanings. For example, at least one of "channels" and "symbols" may be replaced by "signals" ("signaling"). Also, "signals" may be "messages." A reference signal may be abbreviated as an "RS," and may be referred to as a "pilot," a "pilot signal," and so on, depending on which standard applies. A "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Here, the numerology may be communication parameters applied to at least one of transmission and reception of a certain signal or channel. For example, the numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). A slot may be a time unit based on the numerology.

A slot may include a plurality of mini-slots. Each mini-slot may include one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "transmission time interval (TTI)," a plurality of consecutive subframes may be referred to as a "TTI," or one slot or one mini-slot may be referred to as a "TTI." That is, at least one of a subframe and a TTI may be a subframe (1 ms) in existing LTE, may be a period shorter than 1 ms (for example, 1 to 13 symbols), or may be a period longer than 1 ms. A unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. The definition of TTI is not limited to this.

A TTI may be a transmission time unit for channel-encoded data packets (transport blocks), code blocks, codewords, or the like or may be the unit of processing in scheduling, link adaptation, and so on. When a TTI is given, the time interval (for example, the number of symbols) to which transport blocks, code blocks, codewords, or the like are actually mapped may be shorter than the TTI.

In the case that one slot or one mini-slot is referred to as a TTI, one or more TTIs (that is, one or more slots or one or more mini-slots) may be the minimum time unit of scheduling. The number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

A long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and frequency domain, and may include one or a plurality of consecutive subcarriers in the frequency domain.

An RB may include one or a plurality of symbols in the time domain, and may be one slot, one mini-slot, one subframe, or one TTI in length. One TTI and one subframe each may be constituted of one or a plurality of resource blocks.

One or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

The above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. Since various channels (PUCCH (Physical Uplink Control Channel), PDCCH (Physical Downlink Control Channel), and so on) and information elements can be identified by any suitable names, the various names assigned to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Information, signals, and so on can be output at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Physical layer signaling may be referred to as "L1/L2 (Layer 1/Layer 2) control information (L1/L2 control signals)," "L1 control information (L1 control signal)," and so on. RRC signaling may be referred to as an "RRC message," and can be, for example, an RRC connection setup (RRCConnectionSetup) message, an RRC connection reconfiguration (RRCConnectionReconfiguration) message, and so on. MAC signaling may be reported using, for example, MAC control elements (MAC CEs).

Reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Software, commands, information, and so on may be transmitted and received via communication media. For example, in a case that software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure are used interchangeably.

In the present disclosure, the terms such as "precoding," a "precoder," a "weight (precoding wait)," "Quasi-Co-Location (QCL)," a "transmit power," a "phase rotation," an "antenna port," an "antenna port group," a "layer," "the number of layers," a "rank," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," a "bandwidth part (BWP)," and so on can be used interchangeably. A base station may be referred to as the terms such as a "macro cell," a "small cell," a "femto cell," a "pico cell," and so on.

A base station can accommodate one or a plurality of (for example, three) cells (also referred to as "sectors"). In a case that a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," "terminal," and the like may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "communication apparatus," and so on. At least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). At least one of a base station and a mobile station also includes an apparatus which does not necessarily move during communication operation. For example, at least one of a base station and a mobile station may be an IoT (Internet of Things) device such as a sensor.

The base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "D2D (Device-to-Device)," "V2X (Vehicle-to-Everything)," and the like). In this case, the user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these, and so on. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

"Judging (determining)" may be interpreted to mean making "judgments (determinations)" about receiving (for example, receiving information), transmitting (for example, transmitting information), input, output, accessing (for example, accessing data in a memory), and so on.

"Judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

"Judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, in a case that two elements are connected, the two elements may be considered "connected" or

"coupled" to each other by using one or more electrical wires, cables, printed electrical connections, and the like, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." The terms "separate," "be coupled" and so on may be interpreted similarly.

In a case that the terms "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the scope of the invention defined by the recitations of claims. Consequently, the description of the present disclosure is provided only for the purpose of explaining examples, and should by no means be construed to limit the invention according to the present disclosure in any way.

**Claims**

1. A terminal (20) comprising:

    a receiving section (203) that receives downlink control information, DCI, including one or more transmit power control, TPC, commands respectively applied to an uplink transmission on one cell; and
    a control section (401) that applies TPC commands included in a plurality of the DCI respectively received on a plurality of cells to TPC for an uplink transmission on a cell

    wherein, for a first uplink transmission transmitted before a second uplink transmission, the control section does not accumulatively apply a TPC command included in second DCI for scheduling the second uplink transmission received before first DCI for scheduling the first uplink transmission.

2. The terminal (20) according to claim 1, wherein the control section determines, from the DCI, a TPC command for an uplink carrier of the cell and a TPC command for a supplemental uplink, SUL, carrier of the cell, based on different TPC indexes.

3. The terminal (20) according to claim 1 or 2, wherein the receiving section receives a plurality of the DCI in one slot.

4. The terminal (20) according to any one of claims 1 to 3, wherein the DCI is a DCI format 2_2 or 2_3.

5. A radio communication method for a terminal, comprising:

    receiving downlink control information, DCI, including one or more transmit power control, TPC, commands respectively applied to an uplink transmission on one cell;
    applying TPC commands included in a plurality of the DCI respectively received on a plurality of cells to TPC for an uplink transmission on a cell; and
    for a first uplink transmission transmitted before a second uplink transmission, not accumulatively apply a TPC command included in second DCI for scheduling the second uplink transmission received before first DCI for scheduling the first uplink transmission.

6. A system comprising a terminal (20) and a base station (10), wherein

the terminal comprises:

a receiving section (203) that receives downlink control information, DCI, including one or more transmit power control, TPC, commands respectively applied to an uplink transmission on one cell; and
a control section (401) that applies TPC commands included in a plurality of the DCI respectively received on a plurality of cells to TPC for an uplink transmission on a cell,

wherein, for a first uplink transmission transmitted before a second uplink transmission, the control section does not accumulatively apply a TPC command included in second DCI for scheduling the second uplink transmission received before first DCI for scheduling the first uplink transmission;
and
the base station comprises:

a transmitting section that transmits the DCI to the terminal; and
a receiving section that receives the uplink transmission transmitted, by the terminal, on the cell.


**Patentansprüche**

1. Endgerät (20), umfassend:

einen Empfangsabschnitt (203), der Downlink-Steuerungsinformationen (DCI) empfängt, die einen oder mehrere Sendeleistungssteuerungs- (TPC) Befehle einschließen, die jeweils auf eine Uplink-Übertragung an einer Zelle angewendet werden; und
einen Steuerabschnitt (401), der TPC-Befehle anwendet, die in einer Vielzahl der DCI eingeschlossen sind, die jeweils in einer Vielzahl von Zellen empfangen werden, an TPC für eine Uplink-Übertragung an einer Zelle,

wobei der Steuerabschnitt für eine erste Uplink-Übertragung, die vor einer zweiten Uplink-Übertragung gesendet wird, nicht kumulativ einen TPC-Befehl anwendet, der in den zweiten DCI zur Planung der zweiten Uplink-Übertragung eingeschlossen ist, die vor den ersten DCI zur Planung der ersten Uplink-Übertragung empfangen wird.

2. Endgerät (20) nach Anspruch 1, wobei der Steuerabschnitt aus den DCI einen TPC-Befehl für einen Uplink-Träger der Zelle und einen TPC-Befehl für einen ergänzenden Uplink-Träger (SUL-Träger) der Zelle auf der Grundlage verschiedener TPC-Indizes bestimmt.

3. Endgerät (20) nach Anspruch 1 oder 2, wobei der Empfangsabschnitt eine Vielzahl der DCI in einem Slot empfängt.

4. Endgerät (20) nach einem der Ansprüche 1 bis 3, wobei die DCI ein DCI-Format 2_2 oder 2_3 sind.

5. Funkkommunikationsverfahren für ein Endgerät, umfassend:

Empfangen von Downlink-Steuerungsinformationen (DCI), die einen oder mehrere Sendeleistungssteuerungs- (TPC) Befehle einschließen, die jeweils auf eine Uplink-Übertragung an einer Zelle angewendet werden;
Anwenden von TPC-Befehlen, die in einer Vielzahl der DCI eingeschlossen sind, die jeweils an einer Vielzahl von Zellen empfangen wurden, an TPC für eine Uplink-Übertragung an einer Zelle; und
für eine erste Uplink-Übertragung, die vor einer zweiten Uplink-Übertragung gesendet wird, nicht kumulatives Anwenden eines in den zweiten DCI eingeschlossenen TPC-Befehls zur Planung der zweiten Uplink-Übertragung, die vor den ersten DCI zur Planung der ersten Uplink-Übertragung empfangen wurde.

6. System, umfassend ein Endgerät (20) und eine Basisstation (10), wobei das Endgerät umfasst:

einen Empfangsabschnitt (203), der Downlink-Steuerungsinformationen (DCI) empfängt, die einen oder mehrere Sendeleistungssteuerungs- (TPC) Befehle einschließen, die jeweils auf eine Uplink-Übertragung an einer Zelle angewendet werden; und

einen Steuerabschnitt (401), der TPC-Befehle, die in einer Vielzahl der DCI eingeschlossen sind, die jeweils an einer Vielzahl von Zellen empfangen werden, an TPC für eine Uplink-Übertragung an einer Zelle anwendet, wobei der Steuerabschnitt für eine erste Uplink-Übertragung, die vor einer zweiten Uplink-Übertragung gesendet wird, nicht kumulativ einen TPC-Befehl anwendet, der in den zweiten DCI zur Planung der zweiten Uplink-Übertragung eingeschlossen ist, die vor den ersten DCI zur Planung der ersten Uplink-Übertragung empfangen wird; und

die Basisstation umfasst:

einen Sendeabschnitt, der die DCI an das Endgerät überträgt; und

einen Empfangsabschnitt, der die vom Endgerät an die Zelle übertragene Uplink-Übertragung empfängt.

**Revendications**

1. Terminal (20) comprenant :

une section de réception (203) qui reçoit des informations de commande en liaison descendante, DCI, comportant une ou plusieurs commandes de contrôle de puissance de transmission, TPC, appliquées respectivement à une transmission en liaison montante sur une cellule ; et

une section de contrôle (401) qui applique des commandes TPC incluses dans une pluralité de DCI reçues respectivement sur une pluralité de cellules sur le TPC pour une transmission en liaison montante sur une cellule,

dans lequel, pour une première transmission en liaison montante transmise avant une seconde transmission en liaison montante, la section de contrôle n'applique pas de manière cumulative une commande TPC incluse dans des secondes DCI pour programmer la seconde transmission en liaison montante reçue avant les premières DCI pour programmer la première transmission en liaison montante.

2. Terminal (20) selon la revendication 1, dans lequel la section de contrôle détermine, à partir des DCI, une commande TPC pour une porteuse en liaison montante de la cellule et une commande TPC pour une porteuse en liaison montante supplémentaire, SUL, de la cellule, sur la base d'indices TPC différents.

3. Terminal (20) selon la revendication 1 ou la revendication 2, dans lequel la section de réception reçoit une pluralité de DCI dans un créneau.

4. Terminal (20) selon l'une quelconque des revendications 1 à 3, dans lequel les DCI sont au format DCI 2_2 ou 2_3.

5. Procédé de radiocommunication pour un terminal, comprenant :

recevoir des informations de commande en liaison descendante, DCI, comportant une ou plusieurs commandes de contrôle de puissance de transmission, TPC, appliquées respectivement à une transmission en liaison montante sur une cellule ;

appliquer des commandes TPC incluses dans une pluralité de DCI reçues respectivement sur une pluralité de cellules sur des TPC pour une transmission en liaison montante sur une cellule ; et

pour une première transmission en liaison montante transmise avant une seconde transmission en liaison montante, ne pas appliquer de manière cumulative une commande TPC incluse dans des secondes DCI pour programmer la seconde transmission en liaison montante reçue avant les premières DCI pour programmer la première transmission en liaison montante.

6. Système comprenant un terminal (20) et une station de base (10), dans lequel le terminal comprend :

une section de réception (203) qui reçoit des informations de commande en liaison descendante, DCI, comportant une ou plusieurs commandes de contrôle de puissance de transmission, TPC, appliquées respectivement à une transmission en liaison montante sur une cellule ; et

une section de contrôle (401) qui applique des commandes TPC incluses dans une pluralité de DCI reçues respectivement sur une pluralité de cellules sur le TPC pour une transmission en liaison montante sur une cellule, dans lequel, pour une première transmission en liaison montante transmise avant une seconde transmission en liaison montante, la section de contrôle n'applique pas de manière cumulative une commande TPC incluse dans des secondes DCI pour programmer la seconde transmission en liaison montante reçue avant les premières DCI pour programmer la première transmission en liaison montante ;
et
la station de base comprend :

une section de transmission qui transmet les DCI au terminal ; et
une section de réception qui reçoit la transmission en liaison montante transmise, par le terminal, sur la cellule.

FIG. 1

DCI#0:
TPC COMMAND 0

PUSCH#0

DCI#1:
TPC COMMAND 1

DCI#2:
TPC COMMAND 2

PUSCH#1

PUSCH#2

Time

FIG. 2

EP 3 820 097 B1

FIG. 3A

DCI FORMAT 2_2/2_3        PUSCH/PUCCH/SRS

FIG. 3B

DCI FORMAT 2_2/2_3        PUSCH/PUCCH/SRS

## FIG. 4A

DCI FORMAT 2_2/2_3                    PUSCH/PUCCH/SRS

CC#1 → CC#1

CC#2 → CC#2

CC#3 → CC#2

CC#3

## FIG. 4B

DCI FORMAT 2_2 with
PUSCH-RNTI/2_3                        PUSCH/PUCCH/SRS

CC#1 → CC#1

CC#2 → CC#2

CC#3 → CC#3

DCI FORMAT 2_2 with
PUCCH-RNTI

PUSCH/PUCCH/SRS

CC#1

CC#2

CC#3

CC#1

PUCCH cell

CC#2

CC#3

FIG. 5

FIG. 6A

DCI FORMAT 2_2 with
PUCCH-RNTI

Pcell

CC#1 → CC#1

CC#2

PUCCH Scell

CC#2

FIG. 6B

DCI FORMAT 2_2 with
PUCCH-RNTI

Pcell

CC#1 → CC#1

PUCCH Scell

CC#2 → CC#2

DCI FORMAT 2_2

PUSCH(ilast)

PUSCH(i)

ACCUMULATE

FIG. 7

EP 3 820 097 B1

FIG. 8A

DCI FORMAT 2_2/2_3

SLOT

FIG. 8B

DCI FORMAT 2_2/2_3

SLOT

FIG. 8C

DCI FORMAT 2_2/2_3

SLOT

FIG. 9

FIG. 10

FIG. 11

FIG. 12

FIG. 13

FIG. 14

EP 3 820 097 B1

10, 20

```
        1001                              1004
   ┌──────────────┐  1007          ┌──────────────┐
   │              │                │ COMMUNICATION│
   │  PROCESSOR   │────────●───────│  APPARATUS   │
   │              │        │       │              │
   └──────────────┘        │       └──────────────┘

        1002               │             1005
   ┌──────────────┐        │       ┌──────────────┐
   │              │        │       │    INPUT     │
   │   MEMORY     │────────●───────│  APPARATUS   │
   │              │        │       │              │
   └──────────────┘        │       └──────────────┘

        1003               │             1006
   ┌──────────────┐        │       ┌──────────────┐
   │              │        │       │   OUTPUT     │
   │   STORAGE    │────────●───────│  APPARATUS   │
   │              │                │              │
   └──────────────┘                └──────────────┘
```

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA); Physical layer procedures (Release 13). *3GPP TS 36.213 V13.8.0,* December 2017

- *3rd Generation Partnership Project; Technical Specification Group Radio Access Network; NR; Physical layer procedures for control (Release 15),* 29 June 2018